# EUROPÄISCHE PATENTSCHRIFT

(11) **EP 0 787 346 B1**
(45) Veröffentlichungstag und Bekanntmachung des Hinweises auf die Patenterteilung: **02.09.1998**
(21) Anmeldenummer: 95936496.9
(22) Anmeldetag: 14.10.1995
(51) Int. Cl.: G11B 33/04

(54) **AUFBEWAHRUNGSBOX ZUR ARCHIVIERUNG EINES DATEN- ODER TONTRÄGERS**
STORAGE BOX FOR STORING A DATA OR SOUND RECORDING MEDIUM
RECEPTACLE DE DEPOT POUR L'ARCHIVAGE D'UN SUPPORT D'INFORMATIONS OU D'ENREGISTREMENT AUDIO

(30) Priorität: 20.10.1994 DE 4437552; 20.10.1994 DE 9416910 U; 04.10.1995 DE 19536879
(43) Veröffentlichungstag der Anmeldung: 06.08.1997
(73) Patentinhaber: KURZ KUNSTSTOFFE GMBH, 72401 Haigerloch-Owingen (DE)
(72) Erfinder: KURZ, Josef, D-72401 Haigerloch-Owingen (DE); GOEDE, Wouter, NL-2102 BR Heemstede (NL)
(74) Vertreter: Otte, Peter, Dipl.-Ing.
(86) Internationale Anmeldenummer: EP9504047
(87) Internationale Veröffentlichungsnummer: WO9613036

(56) Entgegenhaltungen:
- DE-A- 3 202 204
- DE-U- 9 214 174
- DE-U- 9 316 051
- DE-U- 9 317 752
- FR-A- 2 699 725
- GB-A- 2 251 596
- US-A- 5 191 983

## Beschreibung

Die Erfindung betrifft eine Aufbewahrungsbox zur Archivierung eines Daten- oder Tonträgers mit einer Bodenplatte, zwei Seitenwänden und einer Rückwand, welche zusammen einen nach zwei Seiten offenen quaderförmigen Hohlraum bilden, dessen Breite, Tiefe und Höhe im wesentlichen der Breite, Tiefe und Höhe einer Umhüllung des Daten- oder Tonträgers entspricht, und mit an den Seitenwänden angeordneten Rastmitteln zum Verbinden wenigstens zweier Aufbewahrungsboxen.

Eine derartige Aufbewahrungsbox ist beispielsweise aus der DE- 92 14 174 U1 bekannt. Bei dieser Aufbewahrungsbox wird die Verbindung zweier Aufbewahrungsboxen miteinander dadurch hergestellt, daß die Seitenwände nahe ihrer Oberkante in einem schwächer ausgebildeten Teil mehrere Schlitze aufweisen, in die entsprechend angeordnete, nach innen gerichtete Haken, welche jeweils an den Unterkanten der Seitenwände angeordnet sind, einrasten können, so daß aus mehreren übereinandergesteckten Deckeln ein Fachgehäuse gebildet werden kann. Ferner ist in jeder Seitenwand ein sich über einen Teil derselben erstreckender Schlitz vorgesehen, wodurch die Seitenwand in gewissem Maße federnd wird.

Nachteilig bei dieser Art der Befestigung zweier Aufbewahrungsboxen miteinander ist jedoch, daß trotz des genannten Schlitzes die Verbindung mittels einrastbarer Haken nur sehr schwer zu lösen ist. Zwar wird durch diese Haken ein leichtes Verbinden zweier Aufbewahrungsboxen ermöglicht, um die miteinander verbundenen Aufbewahrungsboxen jedoch wieder voneinander zu lösen, müssen die Hakenverbindungen mittels Hilfswerkzeug gelöst werden. Aus diesem Grunde ist die Aufbewahrungsbox wenig variabel einzusetzen und insoweit auch wenig flexibel handhabbar.

Darüber hinaus ist die Herstellung derartiger Aufbewahrungsboxen, die zumeist Kunststoff-Spritzgußteile sind, aufgrund vieler Hinterschnitte, welche ein aufwendiges Entformen mittels mehrerer Schieber erfordern, sehr aufwendig und aus diesem Grunde auch teuer.

Aus der DE- 32 02 204 A1 ist ferner eine Aufbewahrungsbox zur Archivierung von Daten- oder Tonträgern bekannt, die mittels einer Schnappverbindung mit anderen Aufbewahrungsboxen verbindbar ist, wobei die Schnappverbindung eine wulstartige Leiste aufweist, die in eine wulstartige Ausnehmung einrastet. Eine derartige Schnappverbindung ermöglicht zwar ein leichtes Verbinden mehrerer Aufbewahrungsboxen miteinander, sie weist jedoch den Nachteil auf, daß sie sich leicht löst, insbesondere wenn auf mehrere miteinander verbundene Aufbewahrungsboxen eine Scher- und/oder Torsionskraft ausgeübt wird, beispielsweise beim Ausüben eines Drucks auf einen aus mehreren Aufbewahrungsboxen zusammengebauten Turm auf eine seiner Ecken.

Ferner geht aus der DE- 32 02 204 A1 die Verbindung mehrerer Aufbewahrungsboxen miteinander durch eine Schwalbenschwanzverbindung, bei der eine an der Aufbewahrungsbox angeordnete Schwalbenschwanznut in eine an einer anderen Aufbewahrungsbox dieser gegenüberliegend angeordneten Schwalbenschwanzfeder eingeschoben werden kann. Eine derartige Schwalbenschwanzverbindung hat den Nachteil, daß sie zum einen ein verhältnismäßig aufwendiges Zusammenfügen zweier Aufbewahrungsboxen erfordert, und daß sie darüber hinaus, um ein sicheres Funktionieren zu gewährleisten, verhältnismäßig aufwendig hergestellt werden muß, was im Falle eines Kunststoff-Spritzgußteils wiederum das Entformen mehrerer Hinterschnitte mit zusätzlichen Schiebern erfordert.

Schließlich ist aus der DE- 93 17 752 U1 eine Aufbewahrungsbox für Informationsträger mit einem kastenförmigen Gehäuse, dessen Hohlraum der Form des aufzubewahrenden Informationsträgers angepaßt ist und der zur gemeinsamen Verwendung mit anderen Aufbewahrungsboxen an seiner Außenseite Verbindungsvorrichtungen aufweist, die mit Verbindungsvorrichtungen gleich ausgebildeter, anderer Aufbewahrungsboxen paarweise zusammenpassen, ausgebildet und derart ineinanderschiebbar sind, daß eine Anzahl dieser Aufbewahrungsbehälter zu einer Aufbewahrungseinheit zusammenfügbar ist, bekannt.

Die Verbindung zwischen zwei Aufbewahrungsboxen wird dabei ebenfalls durch ein Ineinanderschieben von paarweise zueinandergehörigen Schwalbenschwanznuten und Schwalbenschwanzfedern bewerkstelligt, welche die bereits oben beschriebenen Nachteile aufweisen.

Der Erfindung liegt daher die Aufgabe zugrunde, eine Aufbewahrungsbox zur Archivierung eines Daten- oder Tonträgers der gattungsgemäßen Art derart zu verbessern, daß durch entsprechend ausgebildete Rastmittel nicht nur ein leichtes Verbinden mehrerer Aufbewahrungsboxen miteinander möglich ist, sondern daß die Rastmittel zum einen auch eine besonders feste und sichere Verbindung vermitteln, zum anderen leicht manuell ohne Zuhilfenahme zusätzlicher Hilfswerkzeuge wieder lösbar sind.

Darüber hinaus soll eine möglichst einfache und daher kostengünstige Herstellung der zumeist als Kunststoff-Spritzgußteile ausgebildeten Aufbewahrungsboxen ermöglicht werden.

Diese Aufgabe wird bei einer Aufbewahrungsbox zur Archivierung eines Daten- oder Tonträgers der eingangs beschriebenen Art erfindungsgemäß dadurch gelöst, daß die Seitenwände jeweils an ihrem oberen, der Bodenplatte abgewandten Ende eine Erhöhung aufweisen, an welcher erste Rastmittel angeordnet sind, daß die Seitenwände jeweils an ihrem unteren, der Bodenplatte zugewandten Ende eine, zu den Erhöhungen im wesentlichen komplementär ausgebildete Ausnehmung derart aufweisen, daß die Verbindung der Seitenwand mit der Bodenplatte zur Ausbildung einer seitlichen Öffnung in der Seitenwand im Bereich der Ausnehmung unterbrochen ist, und daß zur lösbaren Befestigung wenigstens zweier Aufbewahrungsboxen aneinander im Bereich der Ausnehmung jeweils an seitlichen Begrenzungsflächen der Bodenplatte mit den ersten Rastmitteln zusammenwirkende zweite Rastmittel angeordnet sind.

Das Anordnen von Rastmitteln an einer Erhöhung jeweils an dem oberen, der Bodenplatte abgewandten Ende der Seitenwände und das Ausbilden einer zu der Erhöhung im wesentlichen komplementär ausgebildeten Ausnehmung an dem unteren, der Bodenplatte zugewandten Ende der Seitenwände derart, daß eine seitliche Öffnung in der Seitenwand im Bereich der Ausnehmung ausgebildet und die Verbindung der Seitenwand mit der Bodenplatte unterbrochen ist, und das Anordnen von zweiten Rastmitteln im Bereich der Ausnehmung an seitlichen Begrenzungsflächen der Bodenplatte hat den großen Vorteil, daß zwei oder mehr Aufbewahrungsboxen leicht miteinander verbunden werden können, und daß diese Verbindungen auch wieder ohne Zuhilfenahme von Hilfswerkzeug gelöst werden können. Insbesondere durch die Unterbrechung in der Seitenwand im Bereich der Erhöhung und der Ausnehmung, kann die Seitenwand besonders leicht manuell so deformiert werden, daß ein Lösen der Rastmittel ermöglicht wird. Gleichzeitig ermöglicht eine derartige Anordnung der ersten und zweiten Rastmittel eine besonders einfache, schnelle und daher kostengünstige Herstellung der Aufbewahrungsbox als Kunststoff-Spritzgußteil, da Hinterschnitte nur in einer Richtung vorhanden sind, und daher ein leichtes Entformen, d.h. Entnehmen eines gefertigten Kunststoff-Spritzgußteils aus der Form, ermöglicht wird.

Rein prinzipiell ist es möglich, die ersten und zweiten Rastmittel in beliebiger Art und Weise auszugestalten. Besonders vorteilhaft ist es jedoch, daß die ersten Rastmittel Öffnungen und die zweiten Rastmittel in die Öffnungen einrastbare, nach außen vorspringende Rastnasen sind. Dies ermöglicht nicht nur ein festes und schnelles Verbinden zweier Aufbewahrungsboxen, sondern darüber hinaus auch eine besonders einfache Herstellung der Aufnahmebox als Kunststoff-Spritzgußteil, da praktisch nur Hinterschnitte in einer Richtung auftreten, die ein leichtes Entfernen des fertiggestellten Kunststoff-Spritzgußteils ermöglichen.

Als besonders vorteilhaft erweist sich dabei, daß die Öffnungen Bohrungen und die Rastnasen in die Bohrungen passende Kreiszylinder sind, die an ihrer unteren, der Seitenwand abgewandten Seite wenigstens teilweise von außen nach innen keilförmig verlaufend abgeschrägt sind. Hierdurch ist ein besonders schnelles Einrasten der zweiten in die ersten Rastmittel und damit ein schnelles Verbinden mehrerer Aufbewahrungsboxen miteinander und ein späteres leichtes manuelles Lösen der Rastverbindung ohne Zuhilfenahme von Werkzeug möglich, wobei die Rastverbindung gleichzeitig eine feste und sich nicht versehentlich lösende Verbindung der Aufnahmeboxen miteinander ermöglicht.

Darüber hinaus ist es auch möglich, die ersten Rastmittel als zu den Rastnasen komplementär ausgebildete Vertiefungen auszubilden.

In diesem Fall sind die Rastnasen und die Vertiefungen vorzugsweise halbkugelförmig ausgebildet, um ein leichtes Zusammenfügen zweier Aufbewahrungsboxen zu ermöglichen.

Ebenfalls zum leichten Verbinden zweier oder mehrerer Aufbewahrungsboxen miteinander ist es vorteilhaft, daß die seitlichen Begrenzungsflächen der Bodenplatte im Bereich der Ausnehmungen an ihrer den Seitenwänden abgewandten unteren Seite von außen nach innen keilförmig verlaufend abgeschrägt sind, da hierdurch die an den Seitenwänden ausgebildeten Erhöhungen besonders leicht in die zu ihnen komplementär ausgebildeten Ausnehmungen - bei gleichzeitiger Einrastung der ersten in die zweiten Rastmittel - eingeführt werden können.

Insbesondere um eine sichere Verbindung zweier oder mehrerer Aufbewahrungsboxen miteinander zu vermitteln, die auch an mehreren, miteinander verbundenen Aufnahmeboxen gegebenenfalls auftretenden Scher- und/oder Torsionskräften widersteht, ist es sehr vorteilhaft, daß an den Oberseiten der Seitenwände wenigstens auf deren der Rückwand abgewandten Seite neben der Erhöhung ein Vorsprung angeordnet ist, der in einen diesen gegenüberliegenden und zu ihm im wesentlichen komplementär ausgebildeten Einschnitt in die Bodenplatte einer darüberliegend angeordneten Aufbewahrungsbox einsteckbar ist. Auf diese Weise wird auch an der Vorderseite der Aufnahmebox, die durch das Hineinschieben und Entnehmen von Daten- oder Tonträgern besonders belastet ist, eine zusätzliche Seiten-, Scher- oder Torsionskräften widerstehende Verbindung geschaffen.

Um ein leichtes, insbesondere reibungsarmes, Hineinschieben und Herausziehen einer Umhüllung eines Daten- oder Tonträgers zu ermöglichen, und um Verkratzungen sowohl an der Umhüllung des Daten- oder Tonträgers als auch an der Aufbewahrungsbox zu vermeiden, ist vorzugsweise an der oberen, den Seitenwänden und der Rückwand zugewandten Seite, benachbart zu den Seitenwänden und der Rückwand eine auf der Bodenplatte umlaufende, einstückig mit der Bodenplatte verbundene, rippenförmige Erhebung angeordnet.

Um insbesondere auf einfache Weise ein Herausfallen einer in der Aufbewahrungsbox aufgenommenen Umhüllung zu vermeiden, können an den Erhöhungen der Seitenwände, ins Innere der Aufbewahrungsbox ragende Nasen angeordnet sein, deren Abstand vom Boden der Aufbewahrungsbox der Höhe einer Umhüllung entspricht und deren Dicke im wesentlichen der Dicke des Bodens einer Aufbewahrungsbox entspricht.

Um die Aufbewahrungsbox dabei gleichzeitig möglichst kompakt auszugestalten, und dadurch eine möglichst hohe "Packungsdichte" bei mehreren übereinander angeordneten und miteinander verbundenen Aufbewahrungsboxen zu erreichen, sind dabei vorzugsweise in der Bodenplatte der Aufbewahrungsbox zu den Nasen komplementär ausgebildete Ausnehmungen vorgesehen, in welchen die Nasen bei Verbindung zweier oder mehrerer Aufbewahrungsboxen miteinander in besonders platzsparender Weise angeordnet sind.

Insbesondere um ein leichtes Entnehmen der Umhüllung eines Daten- oder Tonträgers aus der Aufbewahrungsbox zu ermöglichen, ist vorteilhafterweise in der Rückwand der Aufbewahrungsbox eine Öffnung zum Herausschieben einer Umhüllung aus der Aufbewahrungsbox vorgesehen.

Um eine besonders flexible Gestaltung mehrerer miteinander verbundener Aufnahmeboxen zu ermöglichen, ist vorgesehen, daß wenigstens zwei nebeneinander angeordnete Aufbewahrungsboxen seitlich miteinander verbindbar sind.

Prinzipiell wäre es dabei möglich, die unterschiedlichsten Arten von Verbindungen vorzusehen. Besonders vorteilhaft ist es jedoch, daß an der Rückwand ein Verbindungsteil herausbrechbar angeordnet ist, welches von außen zur seitlichen Verbindung zweier Aufbewahrungsboxen in in den Seitenwänden angeordnete Ausschnitte einsteckbar ist. Auf diese Weise wird gewissermaßen zu jeder Aufbewahrungsbox auch gleich ein Verbindungsteil mitgeliefert, mit dem eine oder mehrere Aufbewahrungsboxen nebeneinanderstehend miteinander verbindbar sind, wodurch die Flexibilität und die Gestaltungsmöglichkeiten der Anordnung mehrerer Aufnahmeboxen wesentlich erhöht wird.

Die Aufbewahrungsbox kann prinzipiell aus unterschiedlichen Materialien und unter Verwendung unterschiedlichster Herstellungsverfahren hergestellt werden. Besonders vorteilhaft aber ist es, daß die Aufbewahrungsbox ein Kunststoff-Spritzgußteil ist. Hierdurch wird eine einfache, schnelle und kostengünstige Herstellung ermöglicht. Dies ganz besonders, weil bei der erfindungsgemäßen Aufbewahrungsbox praktich nur Hinterschnitte in einer Richtung vorhanden sind, die ein leichtes Herausnehmen aus einer für den Herstellungsprozeß erforderlichen Form unter Zuhilfenahme nur weniger an sich bekannter Schieber ermöglicht.

Insbesondere aus ästhetischen Gründen ist der Kunststoff dabei durchsichtig.

Schließlich können an der Aufbewahrungsbox Standfüße angeordnet werden, um diese bzw. mehrere miteinander verbundene Aufbewahrungsboxen aufstellen zu können, wobei die Standfüße eine derartige Reibung mit der Auflagefläche vermitteln, daß die Aufbewahrungsbox oder mehrere Aufbewahrungsboxen nur schwer auf der Auflage, auf der sie stehen, verschiebbar sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: schaubildlich mehrere übereinandergeordnete und miteinander verbundene Aufbewahrungsboxen einer ersten Ausführungsform zusammen mit einer weiteren einzelnen Aufnahmebox;
- Fig. 2a: eine Draufsicht,
- Fig. 2b: eine Seitenansicht von rechts,
- Fig. 2c: eine teilweise geschnittene Seitenansicht von links,
- Fig. 2d: eine teilweise geschnittene Hinteransicht einer ersten Ausführungsform einer erfindungsgemäßen Aufbewahrungsbox;
- Fig. 3: eine vergrößerte Schnittdarstellung entlang der Linie III-III der Fig. 2b;
- Fig. 4: eine vergrößerte Darstellung der in Fig. 2c mit IV bezeichneten Einzelheit;
- Fig. 5: eine vergrößerte Darstellung der in Fig. 2d mit V bezeichneten Einzelheit;
- Fig. 6: schaubildlich mehrere übereinander angeordnete und miteinander verbundene Aufbewahrungsboxen einer zweiten Ausführungsform zusammen mit einer weiteren einzelnen Aufnahmebox;
- Fig. 7: eine Draufsicht auf die in Fig. 6 dargestellte zweite Ausführungsform einer erfindungsgemäßen Aufbewahrungsbox, in welcher sich die Umhüllung eines Daten- oder Tonträgers befindet und
- Fig. 8: eine teilweise geschnittene Seitenansicht zweier miteinander verbundener Aufnahmeboxen einer in Fig. 6 und 7 dargestellten zweiten Ausführungsform mit darin befindlicher Umhüllung eines Daten- oder Tonträgers.

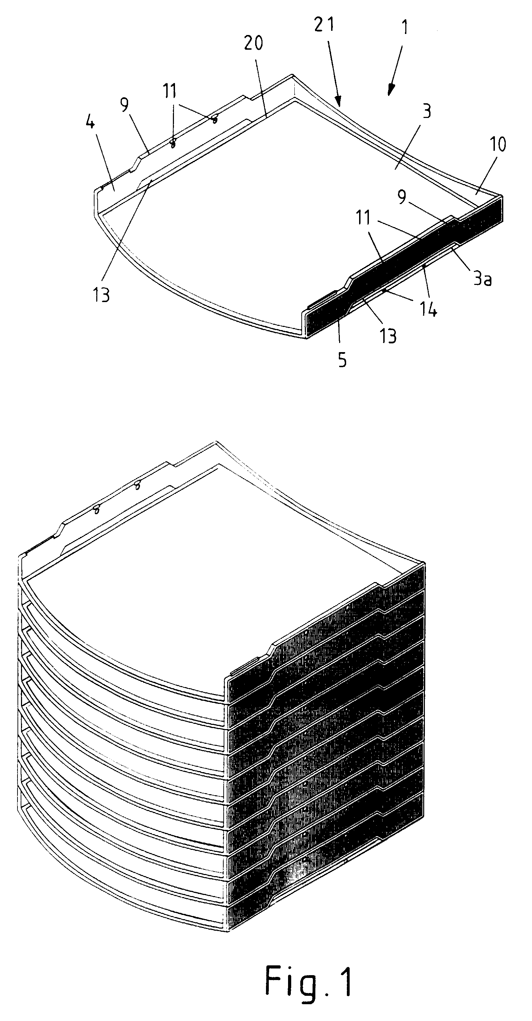

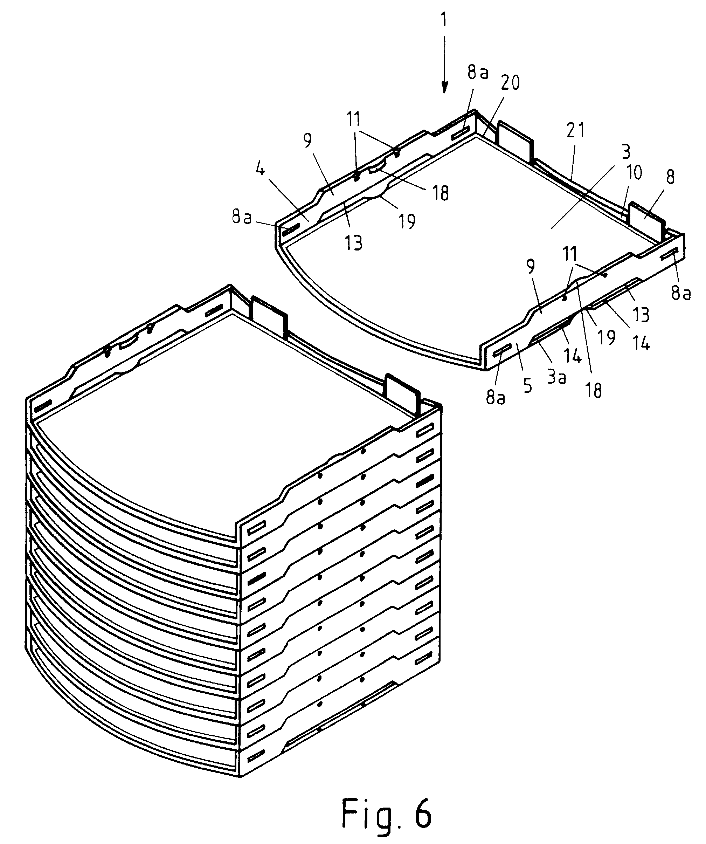

Wie aus Fig. 1 und Fig. 6 hervorgeht, umfaßt eine vorzugsweise aus, insbesondere durchsichtigem, Kunststoff bestehende, als Kunststoff-Spritzgußteil hergestellte Aufbewahrungsbox 1 im wesentlichen eine Bodenplatte 3, zwei Seitenwände 4, 5 und eine Rückwand 10.

Dabei können die Außenflächen der Seitenwände zum leichten Ergreifen der Aufbewahrungsbox 1 mit einer Riffelung versehen sein, wie es in Fig. 1 dargestellt ist.

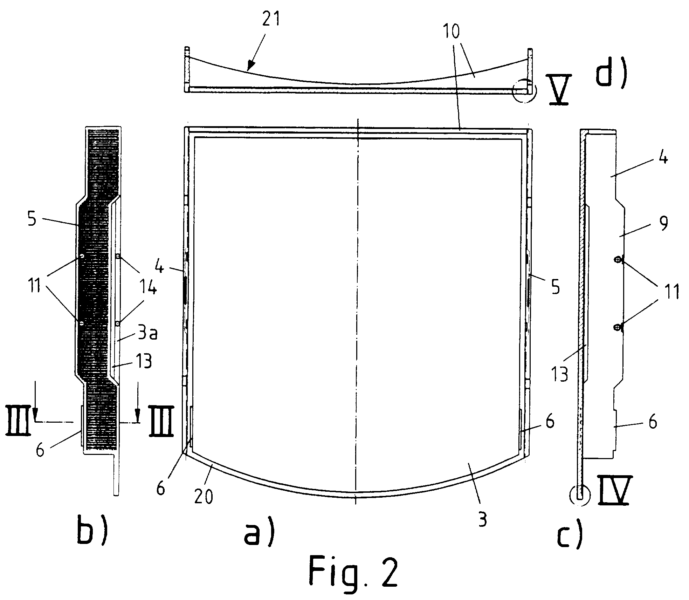

Wie es insbesondere in Fig. 2 dargestellt ist, weisen die Seitenwände 4, 5 jeweils an ihrem oberen, der Bodenplatte 3 abgewandten Ende eine Erhöhung 9 auf, an welcher erste Rastmittel 11 in Form von kreisförmigen Öffnungen vorgesehen sind.

Die Seitenwände 4, 5 weisen jeweils an ihrem unteren, der Bodenplatte 3 zugewandten Ende eine, zu den Erhöhungen 9 im wesentlichen komplementär ausgebildete Ausnehmung 13 auf. Diese Ausnehmung 13 ist derart ausgebildet, daß die Seitenwände 4, 5 im Bereich der Ausnehmung 13 die Verbindung der Seitenwand 4,5 mit der Bodenplatte 3 zur Ausbildung einer seitlichen Öffnung in der Seitenwand 4,5 unterbrochen ist.

Durch diese Unterbrechung, die sich über die gesamte Ausnehmung 13 und damit auch Erhöhung 9 in der Seitenwand 4,5 erstreckt, erhält die Seitenwand 4,5 in diesem Bereich eine Beweglichkeit und Elastizität, die es ermöglicht, daß die in der Seitenwand 4,5 angeordneten ersten Rastmittel 11 in noch näher zu beschreibende zweite Rastmittel 14 leicht einrastet und aus diesen manuell und ohne Zuhilfenahme von Werkzeug wieder ausrastbar sind.

Zur lösbaren Befestigung wenigstens zweier Aufbewahrungsboxen 1 aneinander im Bereich der Ausnehmung 13 sind jeweils an seitlichen Begrenzungsflächen 3a der Bodenplatte 3 die mit den ersten Rastmitteln 11 zusammenwirkenden zweiten Rastmittel 14 angeordnet.

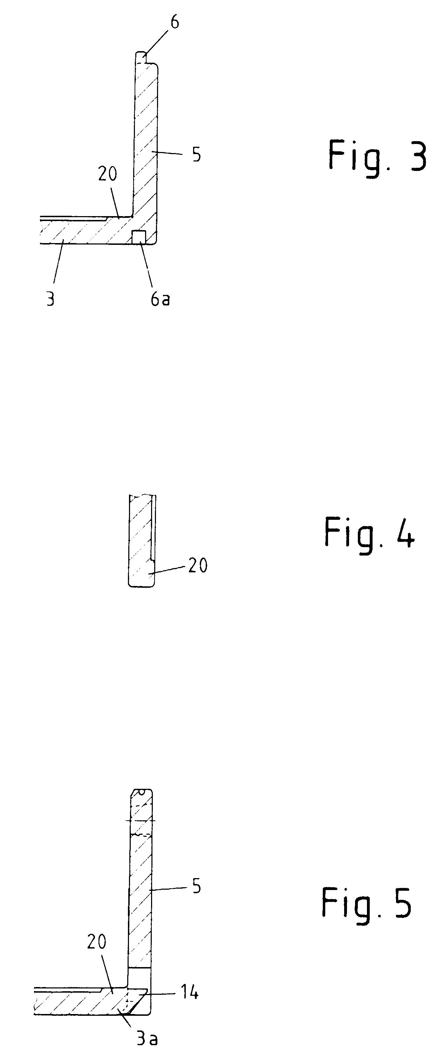

Die zweiten Rastmittel 14 sind in die ersten Rastmittel 11, d.h. in die kreisrunden Öffnungen einrastbare, nach außen vorspringende Rastnasen, die die Form von in die Öffnungen passenden Kreiszylinder aufweisen, die an ihrer unteren, der Seitenwand 4, 5 jeweils abgewandten Seite wenigstens teilweise von außen nach innen keilförmig verlaufend abgeschrägt sind, wie es aus der vergrößerten Ausschnittdarstellung der Fig. 5 hervorgeht. Durch diese keilförmige Abschrägung rasten die zweiten Rastmittel 14 besonders gut in die ersten Rastmittel 11 ein, wenn eine Aufbewahrungsbox 1 über eine weitere, unter ihr befindliche Aufbewahrungsbox 1 gelegt und ein abwärts gerichteter Druck senkrecht auf die Bodenplatte 3 der oberen Aufbewahrungsbox 1 ausgeübt wird.

Umgekehrt können die zweiten Rastmittel 14 auch wieder leicht aus den ersten Rastmitteln 11 ausgerastet werden, wenn die Seitenwände 4, 5 im Bereich der Ausnehmung 13 bzw. der Erhöhung 9, an denen die Seitenwände 4, 5 nicht mit der Bodenplatte 3 befestigt sind, manuell etwas deformiert werden.

Anstelle der unten von außen nach innen keilförmig verlaufend abgeschrägten Kreiszylinder können die zweiten Rastmittel 14 beispielsweise auch in Form von halbkugelförmig vorspringenden Rastnasen ausgebildet sein, während die ersten Rastmittel 11 als hierzu komplementär ausgebildete Vertiefung vorgesehen sein können.

Die Anordnung der zweiten Rastmittel 14 an einer seitlichen Begrenzungsfläche 3a der Bodenplatte 3 hat insbesondere bei der Herstellung der Aufbewahrungsbox 1 als Kunststoff-Spritzgußteil den großen Vorteil, daß lediglich in einer Richtung eine Hinterschneidung ist, so daß beim Entformen einer als Kunststoff-Spritzgußteil fertiggestellten Aufbewahrungsbox 1 nur noch eine minimale Anzahl von an sich bekannten Schiebern notwendig sind, wodurch der Herstellungsprozeß nicht nur vereinfacht, sondern dadurch auch beschleunigt und infolge davon verbilligt wird.

Die seitlichen Begrenzungsflächen 3a der Bodenplatte 3 im Bereich der Ausnehmungen 13 sind an ihrer den Seitenwänden 4, 5 abgewandten unteren Seite jeweils von außen nach innen keilförmig verlaufend abgeschrägt, so daß hierdurch ein leichtes Zusammenstecken der Aufbewahrungsboxen und dadurch ein leichtes Einrasten der ersten Rastmittel 11 in die zweiten Rastmittel 14 ermöglicht wird (vgl. Fig. 5).

Wie in Fig. 2 und insbesondere in Fig. 3 dargetellt, ist an den Oberseiten der Seitenwände 4, 5 auf deren der Rückwand 10 abgewandten Seite neben der Erhöhung 9 ein Vorsprung 6 angeordnet, der in einen ihm gegenüberliegenden und zu ihm im wesentlichen komplementär ausgebildeten Einschnitt 6a in der Bodenplatte 3 einer darüberliegend angeordneten Aufbewahrungsbox 1 einsteckbar ist.

Diese zusätzliche Verbindung verhindert insbesondere, daß mehrere übereinander angeordnete Aufbewahrungsboxen 1 durch Scher- und/oder Torsionskräfte, beispielsweise wenn ein diagonal von einer Ecke ins Zentrum gerichteter Druck auf einen ganzen Turm von übereinander angeordneten Aufbewahrungsboxen 1 ausgeübt wird, auseinanderfallen kann. Darüber hinaus erhöhen die Vorsprünge 6 und die Einschnitte 6a ganz allgemein die Stabilität von übereinander angeordneten Aufbewahrungsboxen 1.

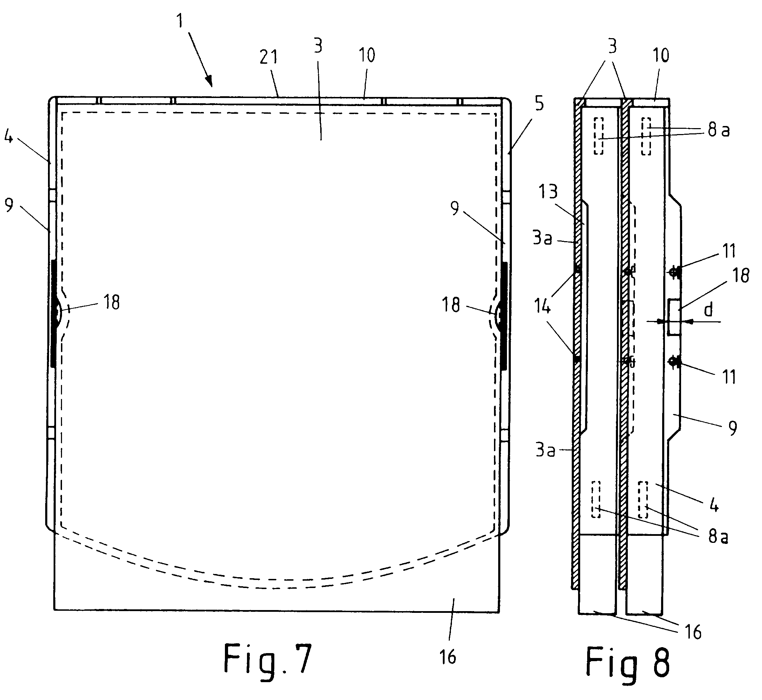

Wie insbesondere aus Fig. 2, 3, 4, 5 hervorgeht, ist an der oberen, den Seitenwänden 4, 5 und der Rückwand 10 zugewandten Seite benachbart zu den Seitenwänden 4, 5 und der Rückwand 10 eine auf der Bodenplatte 3 umlaufende, einstückig mit der Bodenplatte 3 verbundene rippenförmige Erhebung 20 angeordnet, die zum einen ein leichtes, da reibungsarmes, Einschieben von Umhüllungen 16 (vgl. Fig. 7) von Daten- oder Tonträgern in den quaderförmigen Hohlraum der Aufbewahrungsbox 1 ermöglichen, zum anderen verhindern, daß sowohl die Bodenplatte 3 der Aufbewahrungsbox als auch die Umhüllung 16 des Daten- oder Tonträgers verkratzt werden können.

Damit der Daten- oder Tonträger in seiner Umhüllung 16 der Aufbewahrungsbox 1 besonders leicht entnommen werden kann, kann die Tiefe der Aufbewahrungsbox 1 etwas kleiner sein als die Tiefe der Umhüllung 16 eines Daten- oder Tonträgers. Auf diese Weise läßt sich die Umhüllung des Daten- oder Tonträgers leicht von vorne ergreifen und aus der Aufnahmebox 1 herausziehen, auch wenn mehrere Aufnahmeboxen 1 übereinander angeordnet sind (vgl. insbesondere Fig. 7 und 8).

Wie insbesondere in den Fig. 1, 6 und 8 dargestellt, lassen sich mehrere Aufbewahrungsboxen 1 aufgrund der an den Erhöhungen 9 angeordneten ersten Rastmittel 11 und der komplementären Ausnehmungen 13 sowie der zweiten Rastmittel 14 besonders kompakt, d.h. bei nur geringem Platzbedarf übereinanderstapeln. Der Abstand zweier übereinanderliegender Umhüllungen 16 wird im wesentlichen lediglich von der Dicke der Bodenplatte 3 einer Aufbewahrungsbox 1 bestimmt (vgl. Fig. 8). Auf diese Weise läßt sich eine sehr große Packungsdichte von übereinander angeordneten, in einzelnen Aufbewahrungsboxen 1 ein sicher und leicht entnehmbar gelagerten Datenträgern in deren Umhüllung 16 erreichen.

Fig. 6 bis 8 zeigen eine weitere Ausführungsform einer Aufbewahrungsbox, bei welcher an den Erhöhungen 9 der Seitenwände 4, 5 ins Innere der Aufnahmebox 1 vorspringende Nasen 18 vorgesehen sind, deren Dicke d im wesentlichen der Dicke der Bodenplatte 3 entspricht und die ein versehentliches Herausfallen von Daten- oder Tonträgern in ihrer Umhüllung 16 aus einzelnen Aufnahmeboxen 1 verhindern.

Damit die Nasen 18 beim Übereinanderstapeln der Aufbewahrungsboxen 1 nicht stören, sind in der Bodenplatte 3 der Aufbewahrungsbox 1 zu den Nasen 18 komplementäre Ausnehmungen 19 vorgesehen.

Wie insbesondere in Fig. 1, 2, 6, 7 dargestellt, weist die Rückwand 10 der Aufnahmebox 1 eine vorzugsweise mittig angeordnete Öffnung 21 auf, die zum leichten Herausschieben einer Umhüllung 16 eines Daten- oder Tonträgers aus der Aufnahmebox 1 dient.

Um eine seitliche Befestigung mehrerer Aufnahmeboxen 1 aneinander zu ermöglichen, können an den Seitenwänden 4, 5 Befestigungsmittel, beispielsweise in Form von rechteckförmigen Ausnehmungen 8a vorgesehen sein, in die Verbindungselemente 8, die beispielsweise an der Rückwand 10 der Aufbewahrungsbox 1 herausbrechbar angeordnet sind, zur seitlichen Verbindung zweier Aufbewahrungsboxen 1 einsteckbar sind (vgl. Fig. 6 bis 8).

Des weiteren können an der Unterseite einer Aufbewahrungsbox 1 Standfüße angeordnet werden, welche einen großen Reibungskoeffizienten aufweisen und insbesondere verhindern, daß aufgestellte Aufbewahrungsboxen 1, insbesondere eine Vielzahl von übereinander angeordneten Aufbewahrungsboxen 1, auf einer Auflage verschoben werden (nicht dargestellt).

Durch die obenbeschriebene Befestigung mittels der ersten und zweiten Rastmittel 11, 14 wird eine sichere, in jede Raumrichtung fixierte und dennoch leicht manuell, ohne Zuhilfenahme von Werkzeugen lösbare Befestigung von Aufbewahrungsboxen 1 vermittelt. Darüber hinaus lassen sich aufgrund der Ausgestaltung der Aufnahmebox 1 in vorteilhafter Weise mehrere Aufnahmeboxen 1 in sehr kompakter Weise übereinanderstapeln und jeweils aneinander befestigen. Hierdurch wird eine sehr große Packungdichte für Daten- oder Tonträger in ihrer Umhüllung geschaffen. Das gesamte System ist flexibel einsetzbar, an die Bedürfnisse des Benutzers anpaßbar - beispielsweise auf beliebige Höhen anpaßbar - und es ist jederzeit ergänzbar und weiter ausbaubar. Darüber hinaus ist eine sichere Archivierung von Daten- oder Tonträgern möglich.

## Patentansprüche

1. Aufbewahrungsbox zur Archivierung eines Daten- oder Tonträgers mit einer Bodenplatte (3), zwei Seitenwänden (4, 5) und einer Rückwand (10), welche zusammen einen nach zwei Seiten offenen quaderförmigen Hohlraum bilden, dessen Breite, Tiefe und Höhe im wesentlichen der Breite, Tiefe und Höhe einer Umhüllung des Daten- oder Tonträgers entspricht, und mit an den Seitenwänden angeordneten Ausnehmungen (13) sowie Rastmitteln zum Verbinden wenigstens zweier Aufbewahrungsboxen, dadurch gekennzeichnet, daß die Seitenwände (4, 5) jeweils an ihrem oberen, der Bodenplatte (3) abgewandten Ende eine Erhöhung (9) aufweisen, an welcher erste Rastmittel (11) angeordnet sind, daß die Seitenwände (4,5) jeweils an ihrem unteren, der Bodenplatte (3) zugewandten Ende eine, zu der Erhöhung (9) im wesentlichen komplementär ausgebildete Ausnehmung (13) derart aufweisen, daß die Verbindung der Seitenwand mit der Bodenplatte (3) zur Ausbildung einer seitlichen Öffnung in der Seitenwand (4, 5) im Bereich der Ausnehmung (13) unterbrochen ist, und daß zur lösbaren Befestigung wenigstens zweier Aufbewahrungsboxen (1) aneinander im Bereich der Ausnehmung (13) jeweils an seitlichen Begrenzungsflächen (3a) der Bodenplatte (3) mit den ersten Rastmitteln (11) zusammenwirkende zweite Rastmittel (14) angeordnet sind.

2. Aufbewahrungsbox nach Anspruch 1, dadurch gekennzeichnet, daß die ersten Rastmittel (11) Öffnungen und die zweiten Rastmittel (14) in die Öffnungen einrastbare, nach außen vorspringende Rastnasen sind.

3. Aufbewahrungsbox nach Anspruch 2, dadurch gekennzeichnet, daß die Öffnungen kreisförmig und die Rastnasen in die Öffnungen passende Kreiszylinder sind, die an Ihrer unteren, der Seitenwand abgewandten Seite wenigstens teilweise von außen nach innen keilförmig verlaufend abgeschrägt sind.

4. Aufbewahrungsbox nach Anspruch 1 oder 2, dadurch gekennzeichnet, daß die ersten Rastmittel (11) zu den Rastnasen komplementär ausgebildete Vertiefungen sind.

5. Aufbewahrungsbox nach Anspruch 4, dadurch gekennzeichnet, daß die Rastnasen und die Vertiefungen halbkugelförmig ausgebildet sind.

6. Aufbewahrungsbox nach einem der voranstehenden Ansprüche, dadurch gekennzeichnet, daß die seitlichen Begrenzungsflächen (3a) der Bodenplatte (3) im Bereich der Ausnehmungen (13) an ihrer den Seitenwänden (4, 5) abgewandten unteren Seite jeweils von außen nach innen keilförmig verlaufend abgeschrägt sind.

7. Aufbewahrungsbox nach einem der voranstehenden Ansprüche, dadurch gekennzeichnet, daß an den Oberseiten der Seitenwände (4, 5) wenigstens auf deren der Rückwand (10) abgewandten Seite neben der Erhöhung (8) ein Vorsprung (6) angeordnet ist, der in eine ihm gegenüberliegende und zu ihm im wesentlichen komplementär ausgebildete Ausnehmung (6a) in der Bodenplatte einer darüberliegend angeordneten Aufbewahrungsbox (1) einsteckbar ist.

8. Aufbewahrungsbox nach einem der voranstehenden Ansprüche, dadurch gekennzeichnet, daß an der oberen, den Seitenwänden (4, 5) und der Rückwand (10) zugewandten Seite benachbart zu den Seitenwänden (4, 5) und der Rückwand (10) eine auf der Bodenplatte (3) umlaufende, einstückig mit der Bodenplatte (3) verbundene, rippenförmige Erhebung (20) angeordnet ist.

9. Aufbewahrungsbox nach einem der voranstehenden Ansprüche, dadurch gekennzeichnet, daß zur Sicherung gegen Herausfallen einer in der Aufbewahrungsbox (1) aufgenommenen Umhüllung (16) an den Erhöhungen (9) ins Innere der Aufbewahrungsbox (1) ragende Nasen (18) angeordnet sind, deren Abstand von der Bodenplatte der Aufbewahrungsbox (1) der Höhe einer Umhüllung (16) entspricht und deren Dicke (d) im wesentlichen der Dicke der Bodenplatte (3) einer Aufbewahrungsbox (1) entspricht.

10. Aufbewahrungsbox nach Anspruch 9, dadurch gekennzeichnet, daß in der Bodenplatte (3) der Aufbewahrungsbox (1) zu den Nasen (18) komplementär ausgebildete Ausnehmungen (19) vorgesehen sind.

11. Aufbewahrungsbox nach einem der voranstehenden Ansprüche, dadurch gekennzeichnet, daß in der Rückwand (10) der Aufbewahrungsbox (1) eine Öffnung zum Herausschieben einer Umhüllung (16) aus der Aufbewahrungsbox (1) vorgesehen ist.

12. Aufbewahrungsbox nach einem der voranstehenden Ansprüche, dadurch gekennzeichnet, daß wenigstens zwei nebeneinander angeordneten Aufbewahrungsboxen (1) seitlich miteinander verbindbar sind.

13. Aufbewahrungsbox nach Anspruch 12, dadurch gekennzeichnet, daß an der Rückwand (10) ein Verbindungselement (8) herausbrechbar angeordnet ist, welches von außen zur seitlichen Verbindung zweier Aufbewahrungsboxen (1) in in den Seitenwänden (8a) angeordnete Ausschnitte einsteckbar ist.

14. Aufbewahrungsbox nach einem der voranstehenden Ansprüche, dadurch gekennzeichnet, daß sie aus, insbesondere durchsichtigem Kunststoff besteht.

15. Aufbewahrungsbox nach einem der voranstehenden Ansprüche, dadurch gekennzeichnet, daß sie ein Kunststoffspritzgußteil ist.

16. Aufbewahrungsbox nach einem der voranstehenden Ansprüche, dadurch gekennzeichnet, daß an ihrer Unterseite Standfüße befestigbar sind.

## Claims

1. A storage box for storing a data or sound carrier, with a base plate (3), two lateral walls (4, 5) and a rear wall (10), which together form a cuboid hollow space which is open on two sides and the width, depth and height of which essentially correspond to the width, depth and height of a casing of the data or sound carrier, and with recesses (13) and catching means provided on the lateral walls for connecting at least two storage boxes, **characterized in that** the lateral walls (4, 5) are each provided at their upper end remote from the base plate (3) with one respective raised portion (9) on which first catching means (11) are provided, the lateral walls (4, 5) are each provided at their lower end facing the base plate (3) with one respective recess (13) designed so as substantially to match the raised portion (9), in such a way that the join of the lateral wall to the base plate (3) is interrupted in the region of the recess (13) in order to form a lateral opening in the lateral wall (4, 5), and second catching means (14) cooperating with the first catching means (11) are provided on respective lateral boundary faces (3a) of the base plate (3) in each case in order to secure at least two storage boxes (1) detachably to each other in the region of the recess (13).

2. A storage box according to Claim 1, **characterized in that** the first catching means (11) are openings, and the second catching means (14) are catching tabs projecting outwards and engageable in the openings.

3. A storage box according to Claim 2, **characterized in that** the openings are circular and the catching tabs are circular cylinders which fit into the openings and which extend sloping inwards from the outside in the manner of a wedge at least in part on their underside remote from the lateral wall.

4. A storage box according to Claim 1 or 2, **characterized in that** the first catching means (11) are depressions designed so as to match the catch tabs.

5. A storage box according to Claim 4, **characterized in that** the catch tabs and the depressions are designed in the shape of hemispheres.

6. A storage box according to one of the preceding Claims, **characterized in that** in the region of the recesses (13) the lateral boundary faces (3a) of the base plate (3) each extend sloping inwards from the outside in the manner of a wedge on their underside remote from the lateral walls (4, 5).

7. A storage box according to one of the preceding Claims, **characterized in that** a projection (6) is provided beside the raised portion (8) on the tops of the lateral walls (4, 5) at least on their side remote from the rear wall (10), the said projection (6) being insertable into a recess (6a) opposite it and designed so as substantially to match it in the base plate of a storage box (1) situated thereabove.

8. A storage box according to one of the preceding Claims, **characterized in that** a rib-shaped raised portion (20) extending on the base plate (1) and joined integrally to the said base plate (1) is provided adjacent to the lateral walls (4, 5) and the rear wall (10) on the upper side facing the lateral walls (4, 5) and the rear wall (10).

9. A storage box according to one of the preceding Claims, **characterized in that** tabs (18) projecting into the interior of the storage box (1) are provided on the raised portions (9) in order to prevent a casing (16) received in the storage box (1) from falling out, the distance of the said tabs (18) from the base plate of the storage box (1) corresponding to the height of a casing (16) and the thickness (d) thereof essentially corresponding to the thickness of the base plate (3) of a storage box (1).

10. A storage box according to Claim 9, **characterized in that** recesses (19) designed so as to match the tabs (18) are provided in the base plate (3) of the storage box (1).

11. A storage box according to one of the preceding Claims, **characterized in that** an opening for pushing a casing (16) out of the storage box (1) is provided in the rear wall (10) of the storage box (1).

12. A storage box according to one of the preceding Claims, **characterized in that** at least two storage boxes (1) arranged adjacent to each other can be joined to each other laterally.

13. A storage box according to Claim 12, **characterized in that** a connecting element (8), which can be inserted from outside into apertures arranged in the lateral walls (8a) in order to join two storage boxes (1) laterally, is arranged on the rear wall (10) in a manner capable of being broken off.

14. A storage box according to one of the preceding Claims, **characterized in that** it consists of plastics material, in particular transparent plastics material.

15. A storage box according to one of the preceding Claims, **characterized in that** it is an extrusion-moulded part of plastics material.

16. A storage box according to one of the preceding Claims, **characterized in that** feet can be secured to the underside thereof.

## Revendications

1. Boîte de stockage servant à archiver des supports de données ou de sons, constituée d'une plaque de fond (3), de deux parois latérales (4, 5) et d'une paroi arrière (10) délimitant ensemble un volume creux parallélépipédique ouvert de deux côtés et dont la largeur, la profondeur et la hauteur correspondent essentiellement à celles de l'emballage d'un support de données ou de sons, des évidements (13) ainsi que des moyens d'arrêt étant prévus sur les parois latérales de manière à assurer la liaison d'au moins deux boîtes de stockage,
caractérisée en ce que
- chaque paroi latérales (4, 5) présente sur son extrémité supérieure éloignée de la plaque de fond (3), un bossage (9) sur lequel sont montés des premiers moyens d'arrêt (11),
- chaque paroi latérale (4, 5) présente à son extrémité inférieure tournée vers la plaque de fond (3) un évidement (13) de forme essentiellement complémentaire à celle du bossage (9), de sorte que la liaison de la paroi latérale avec la plaque de fond (3) est interrompue par création d'une ouverture latérale dans la paroi latérale (4, 5) dans la zone de l'évidement (13),
- pour fixer l'une sur l'autre de manière amovible, au moins deux boîtes de stockage (1), il est prévu dans la zone de l'évidement (13) sur chacune des faces latérales (3a) délimitant la plaque de fond (3) des seconds moyens d'arrêt (14) coopérant avec les premiers moyens d'arrêt (11).

2. Boîte de stockage selon la revendication 1,
caractérisée en ce que
les premiers moyens d'arrêt (11) sont des ouvertures dans lesquelles peuvent venir se bloquer les seconds moyens d'arrêt (14) qui sont des dents d'arrêt faisant saillie vers l'extérieur.

3. Boîte de stockage selon la revendication 2,
caractérisée en ce que
les ouvertures sont circulaires et les dents d'arrêt sont des cylindres circulaires ajustés à ces ouvertures et dont les faces inférieures tournant le dos à la paroi latérale correspondante, sont au moins en partie taillées en forme de coin en pente de l'extérieur vers l'intérieur.

4. Boîte de stockage selon la revendication 1 ou 2,
caractérisée en ce que
les premiers moyens d'arrêt (11) sont des évidements dont la forme est complémentaire de celle des dents d'arrêt.

5. Boîte de stockage selon la revendication 4,
caractérisée en ce que
les dents d'arrêt et les évidements ont la forme d'une demie sphère.

6. Boîte de stockage selon une des revendications précédentes,
caractérisée en ce que
les faces (3a) de la plaque de fond (3) qui délimitent celle-ci dans la zone des évidements (13) sont taillées en forme de coin en pente de l'intérieur vers l'extérieur, le long de leurs bords inférieurs éloignés des parois latérales correspondantes (4, 5).

7. Boîte de stockage selon une des revendications précédentes,
caractérisée en ce que
sur le bord supérieur des parois latérales (4, 5) et au moins dans la partie de ce bord éloignée de la paroi arrière (10) se trouve, à côté du bossage (8), une saillie (6) qui peut venir s'engager dans un évidement (6a) de forme essentiellement complémentaire et situé en face dans la plaque de fond d'une boîte de stockage (1) posée sur la précédente.

8. Boîte de stockage selon une des revendications précédentes,
caractérisée en ce que
sur sa face supérieure tournée vers les parois latérales (4, 5) et la paroi arrière (10), près de ces parois, la plaque de fond (10) présente une surélévation (20) en forme de nervure périphérique, faisant partie de la plaque.

9. Boîte de stockage selon une des revendications précédentes,
caractérisée en ce que
pour éviter que s'échappe un emballage (16) logé dans la boîte de stockage (1), celle-ci est équipée, le long des bossages (9) de becs (18) pénétrant dans la boîte et espacées de la plaque de fond de la boîte (1) d'une distance correspondant à la hauteur de l'emballage (16), l'épaisseur (d) des becs correspondant essentiellement à l'épaisseur de la plaque de fond (3) d'une boîte de stockage (1).

10. Boîte de stockage selon la revendication 9,
caractérisée en ce que
la plaque de fond (3) de la boîte de stockage (1) présente des évidements (19) de forme complémentaire à celle des dents (18).

11. Boîte de stockage selon une des revendications précédentes,
caractérisée en ce que
la paroi arrière (10) de la boîte de stockage (1) est munie d'une ouverture permettant d'extraire un emballage (16) de la boîte (1).

12. Boîte de stockage selon une des revendications précédentes,
caractérisée en ce qu'
il est possible de relier latéralement au moins deux boîtes de stockage (1) disposées côté à côte.

13. Boîte de stockage selon la revendication 12,
caractérisée en ce que
la paroi arrière (10) comporte un élément de liaison (8) que l'on peut retirer par fracture et introduire de l'extérieur dans des découpes (8a) des parois latérales de manière à relier par les côtés deux boîtes de stockage (1).

14. Boîte de stockage selon une des revendications précédentes,
caractérisée en ce qu'
elle est faite en particulier d'une matière plastique, transparente.

15. Boîte de stockage selon une des revendications précédentes,
caractérisée en ce que
c'est une pièce en matière plastique injectée.

16. Boîte de stockage selon une des revendications précédentes,
caractérisée en ce que
des pieds d'appui peuvent être fixés sur sa face inférieure.
